(19) Europäisches Patentamt
European Patent Office
Office européen des brevets

(11) **EP 3 772 038 A1**

(12) **EUROPEAN PATENT APPLICATION**

(43) Date of publication:
**03.02.2021 Bulletin 2021/05**

(51) Int Cl.:
***G06T 11/00*** *(2006.01)*

(21) Application number: **20165958.8**

(22) Date of filing: **26.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2019 CN 201910691140**

(71) Applicant: **CAL-COMP BIG DATA, INC Shenkeng, New Taipei City 222 (TW)**

(72) Inventor: **LIN, Yung-Hsuan 222 New Taipei City (TW)**

(74) Representative: **2K Patentanwälte Blasberg Kewitz & Reichel Partnerschaft mbB Schumannstrasse 27 60325 Frankfurt am Main (DE)**

(54) **AUGMENTED REALITY DISPLAY METHOD OF SIMULATED LIP MAKEUP**

(57) An augmented reality display method of simulated lip makeup is provided. A system of simulation makeup in the present disclosed example is used to retrieve a facial image (40, 60, 700, 80) of a user (40), recognize a plurality of feature points (50) in the facial image (40, 60, 700, 80), generate a lip mask (61, 701) according to the plurality of characteristic points (50) and the facial image (40, 60, 700, 80), retrieve lip color data (62, 705), execute a simulation process of lip makeup on lips in the facial image (40, 60, 700, 80) according the lip color data (62, 705) and the lip mask (61, 701) for obtaining a facial image with lip makeup (64, 709, 85), and display the facial image with lip makeup (64, 709, 85).

FIG.9

**Description**

BACKGROUND OF THE INVENTION

Field of the Invention

The technical field relates to simulated makeup and augmented reality, and more particularly related to an augmented reality display method of simulated lip makeup.

Description of Related Art

Currently, lip makeup is one of the most common makeup items available. A suitable lip color can accentuate the lip shape of the user and emphasize facial features, so as to achieve the effect of making the face more beautiful.
However, the user can usually only imagine whether the lip color is suitable to his/her face shape before applying the lip makeup. As a result, the user with the poor skills in the lip makeup usually finds that the lip color is not suitable to him/her only after finishing the lip cosmetology. The above situation requires the user to remove the makeup and make up his/her lips with another different lip color, wasting time and makeup materials.
Accordingly, there is currently a need for technology with the ability to display an augmented reality image simulating the appearance of the user with the lip makeup on as the reference to the user.

SUMMARY OF THE INVENTION

The technical field relates to an augmented reality display method of simulated lip makeup with the ability to show the appearance of the user with the lip makeup on using augmented reality based on the designated lip color data.
One of the exemplary embodiments, an augmented reality display method of simulated lip makeup is disclosed, the method is applied to a system of simulation makeup, the system of simulation makeup comprises an image capture module, a display module and a processing module, the method comprises following steps: a) retrieving a facial image of a user by the image capture module; b) at the processing module, executing a face analysis process on the facial image for recognizing a plurality of lip feature points corresponding lips in the facial image; c) generating a lip mask based on the lip feature points and the facial image, wherein the lip mask is used to indicate position and range of the lips in the facial image; d) retrieving lip color data; e) executing a simulation process of lip makeup on the lips of the facial image based on the lip color data and the lip mask for obtaining a facial image with lip makeup; and, f) displaying the facial image with lip makeup on the display module.
The present disclosed example can effectively simulate the appearance of the user with lip makeup as a reference for selecting the type of lip makeup to the user.

BRIEF DESCRIPTION OF DRAWINGS

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:

FIG. 1 is an architecture diagram of a system of simulation makeup according to one embodiment of the present disclosed example;
FIG. 2 is a usage schematic view of a system of simulation makeup according to one embodiment of the present disclosed example;
FIG. 3 is a usage schematic view of a system of simulation makeup according to one embodiment of the present disclosed example;
FIG. 4 is a flowchart of an augmented reality display method of simulated lip makeup according to a first embodiment of the present disclosed example;
FIG. 5 is a schematic view of a face analysis process according to one embodiment of the present disclosed example;
FIG. 6 is a schematic view of simulated lip makeup according to one embodiment of the present disclosed example;
FIG. 7A is a first part of flowchart of an augmented reality display method of simulated lip makeup according to a second embodiment of the present disclosed example;
FIG. 7B is a second part of flowchart of an augmented reality display method of simulated lip makeup according to a second embodiment of the present disclosed example;
FIG. 8 is a flowchart of a color-mixing process according to a third embodiment of the present disclosed example;

FIG. 9 is a schematic view of simulated lip makeup according to one embodiment of the present disclosed example;

FIG. 10 is a flowchart of a dewiness process according to a fourth embodiment of the present disclosed example;

FIG. 11 is a flowchart of a brightness-filtering process according to a fifth embodiment of the present disclosed example; and

FIG. 12 is a schematic view of simulated dewy effect according to one embodiment of the present disclosed example.

## DETAILED DESCRIPTION OF THE INVENTION

In cooperation with attached drawings, the technical contents and detailed description of the present disclosed example are described thereinafter according to some exemplary embodiments, being not used to limit its executing scope. Any equivalent variation and modification made according to appended claims is all covered by the claims claimed by the present disclosed example.

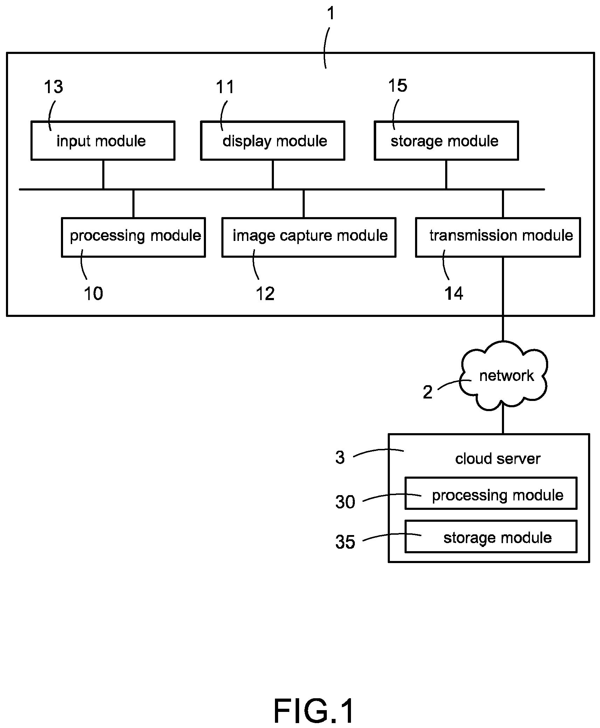

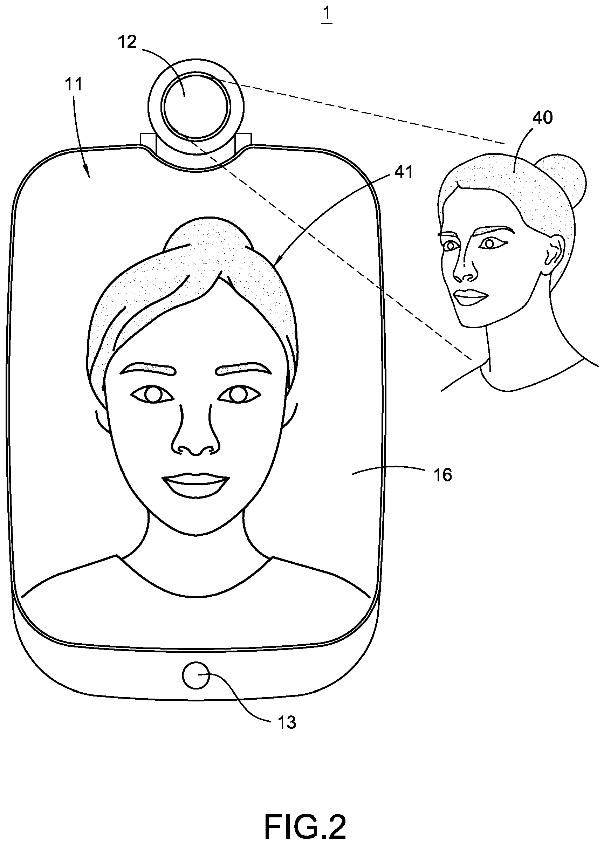

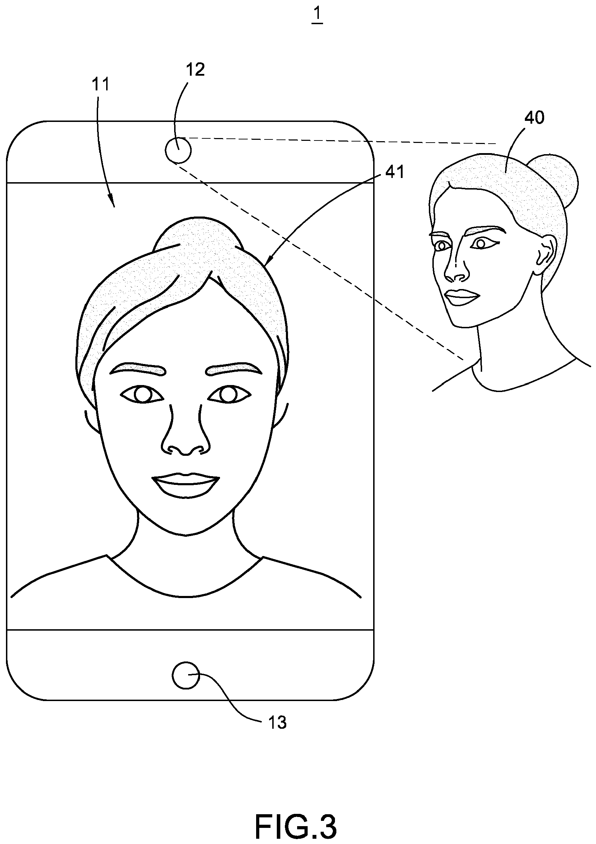

Please refer to FIG. 1 to FIG. 3 simultaneously, FIG. 1 is an architecture diagram of a system of simulation makeup according to one embodiment of the present disclosed example, FIG. 2 is a usage schematic view of a system of simulation makeup according to one embodiment of the present disclosed example, and FIG. 3 is a usage schematic view of a system of simulation makeup according to one embodiment of the present disclosed example.

The present disclosed example discloses a system of simulation makeup, the system of simulation makeup is mainly used to execute an augmented reality display method of simulated lip makeup, so as to simulate an appearance of a user with lip makeup and show the appearance of the user with lip makeup in a way of augmented reality.

As shown in FIGS. 1 and 3, the system of simulation makeup of the present disclosed example may comprise an apparatus of simulation makeup 1, the apparatus of simulation makeup 1 mainly comprises a processing module 10, a display module 11, an image capture module 12, an input module 13, a transmission module 14 and a storage module 15. The processing module 10, the display module 11, the image capture module 12, the input module 13, the transmission module 14 and the storage module 15 are electrically connected to each other by at least one bus.

The display module (such as color LCD monitor) 11 is used to display information. The image capture module 12 (such as camera) is used to capture images. The input module 13 (such as buttons or touch pad) is used to receive the user's operation. The transmission module 14 (such as Wi-Fi module, Bluetooth module, mobile network module or the other wireless transmission modules, or USB module, RJ-45 network module or the other wired transmission modules) is used to connect to the network 2 and/or the external apparatus. The storage module 15 is used to store data. The processing module 10 is used to control each device of the apparatus of simulation makeup 1 to operate.

In one of the exemplary embodiments, the storage module 15 may comprise a non-transient storage media, in which the non-transient storage media stores a computer program (such as firmware, operating system, application program or a combination of the above program of the apparatus of simulation makeup 1), and the computer program records a plurality of corresponding computer-executable codes. The processing module 10 may further implement the method of each embodiment of the present disclosed example via the execution of the computer-executable codes.

In one of the exemplary embodiments, the augmented reality display method of simulated lip makeup of each embodiment of the present disclosed example is implemented in the local end. Namely, each embodiment of the present disclosed example may be implemented by the apparatus of simulation makeup 1 completely, but this specific example is not intended to limit the scope of the present disclosed example.

In one of the exemplary embodiments, the augmented reality display method of simulated lip makeup of each embodiment of the present disclosed example may be implemented by combining with cloud computing technology. More specifically, the transmission module 14 of the apparatus of simulation makeup 1 may be connected to the cloud server 3 via network 2, and the cloud server 3 comprises a processing module 30 and a storage module 35. The augmented reality display method of simulated lip makeup of each embodiment of the present disclosed example may be implemented by making the cloud server 3 interact with the apparatus of simulation makeup 1.

In one of the exemplary embodiments, as shown in FIG. 2, the apparatus of simulation makeup 1 may be a smart mirror, and have the ability to provide the functions of optical mirror and electronic mirror simultaneously. More specifically, the apparatus of simulation makeup 1 may further comprise a mirror glass 16 (such as unidirectional glass) and a case. The mirror glass 16 is used for appearing an optical image 41 of the user 40 in reflection to implement the function of optical mirror. Above modules 10-15 may be arranged in the case of the apparatus of simulation makeup 1.

Furthermore, the display module 11 is arranged in the case and on the rear of the mirror glass 16, and a display surface faces toward front of the mirror glass 16. Namely, the user does not have the ability to discover the existence of the display module 11 directly by inspecting the appearance. Moreover, the display module 11 may display information on the mirror glass 16 by transmission after being turned on or the brightness of backlight being increased.

Furthermore, the processing module 10 may control the display module 11 to display the additional information (such as weather information, date information, graphical user interface or the other information) in the designated region, such as the edge of the mirror glass 16 or the other region having a lower probability of overlapping the optical mirror image 41.

Furthermore, the image capture module 12 may be arranged upon the mirror glass 16 and shoot toward the front of the mirror glass 16, so as to implement the electronic mirror function. The input module 13 may comprise at least one physical button arranged on the front side of the apparatus of simulation makeup 1, but this specific example is not intended to limit the scope of the present disclosed example.

Please be noted that the image capture module 12 is arranged after the mirror glass 16, but this specific example is not intended to limit the scope of the present disclosed example. The image capture module 12 may be arranged in any position of the apparatus of simulation makeup 1 according to the product demand, such as being arranged behind the mirror glass 16 for reducing the probability of the image capture module 12 being destroyed and making the appearance simple.

In one of the exemplary embodiments, as shown in FIG. 3, the apparatus of simulation makeup 1 may be a general-purpose computer device (such as a smartphone, a tablet, or an electronic signboard with a camera function, taking a smartphone for example in FIG 3), and only have the ability to function as an electronic mirror.

More specifically, above-mentioned modules 10-15 may be installed in a case of the apparatus of simulation makeup 1, the image capture module 12 and the display module 11 may be installed on the same side(surface) of the apparatus of simulation makeup 1, so as to make the user be captured and watch the display module 11 simultaneously. Moreover, the apparatus of simulation makeup 1 may continuously capture images of the area in front of the apparatus of simulation makeup 1 (such as a facial image of the user) by the image capture module 12 when the execution of the computer program (such as the application program) executes the electable process(es) on the captured images optionally (such as the mirroring flip process or the brightness-adjusting process and so forth), and display the captured (processed) images by the display module 11 instantly. Thus, the user 40 may watch his/her electronic mirror image 41 on the display module 11.

Furthermore, in the present disclosed example, the apparatus of simulation makeup 1 may further execute the following face analysis process, simulation process of lip makeup and/or dewiness process on the capture images, and display the processed images on the display module 11 instantly. Thus, the user 40 may see the electronic mirror image 41 with the simulated lip makeup on the display module 11.

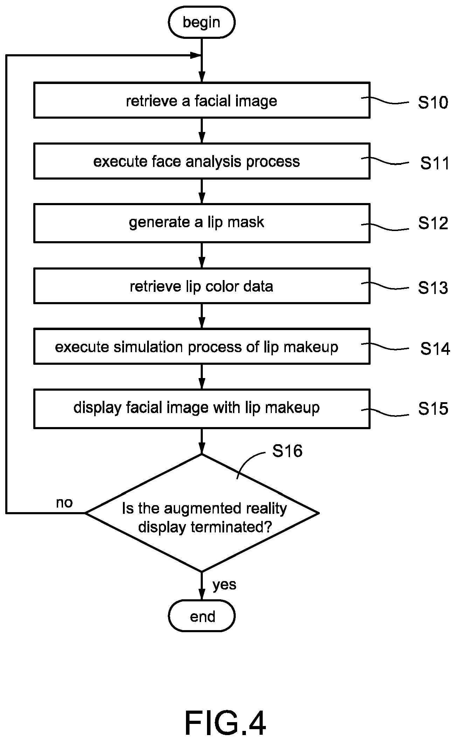

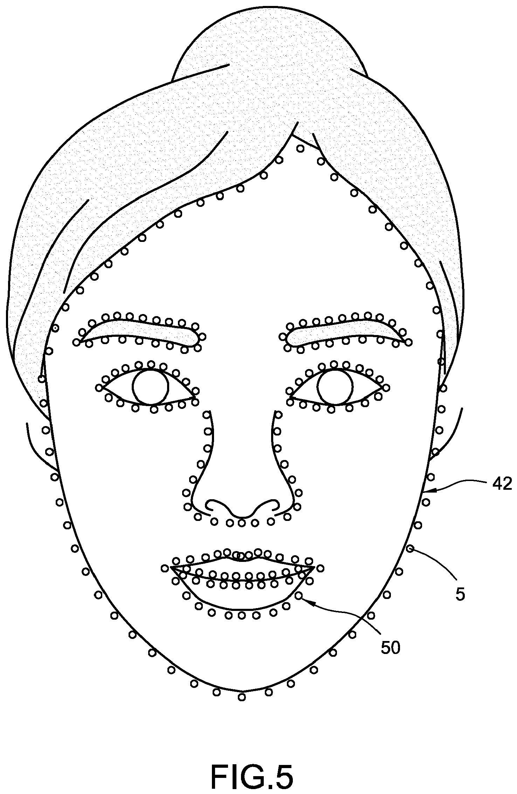

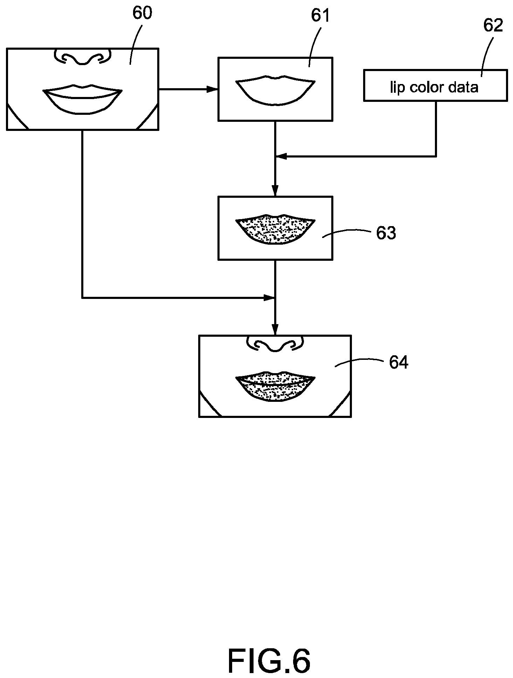

Please refer to FIG. 4 to FIG. 6 simultaneously, FIG. 4 is a flowchart of an augmented reality display method of simulated lip makeup according to a first embodiment of the present disclosed example, FIG. 5 is a schematic view of a face analysis process according to one embodiment of the present disclosed example, and FIG. 6 is a schematic view of simulated lip makeup according to one embodiment of the present disclosed example. The augmented reality display method of simulated lip makeup of each embodiment of the present disclosed example may be executed by the system of simulation makeup and the apparatus of simulation makeup shown in FIG. 1, FIG. 2 or FIG. 3. The augmented reality display method of simulated lip makeup if this embodiment mainly comprises the following steps for implementing a function of simulating lip makeup.

Step S10: the processing module 10 controls the image capture module 12 to capture the facial image of the user, the captured facial image may be a full or partial facial image (take captured partial facial image 60 for example in FIG. 6).

In one of the exemplary embodiments, the processing unit 10 captures the user's facial image 60 when detecting that the user is in front of the apparatus of simulation makeup 1. More specifically, the processing unit 10 is configured to control the image capture module 12 to capture toward the front side of the mirror glass 16 continuously, for continuously obtaining the front mirror images with a wider field of view and continuously executing detection on the front mirror images for determining whether there is any human being captured. The processing unit 10 may be configured to not execute the designated process on the front mirror image to save computing resources and prevent the redundant process from execution when there is no human being captured. When determining that someone is captured, the processing unit 10 may be configured to execute the recognition of facial position on the front mirror image (such as the half body image of the user), and crop the front mirror image into a facial image 60 with a narrower field of view.

In one of the exemplary embodiments, the processing unit 10 is configured to control the image capture module 12 to capture the user's face directly for obtaining the user's facial image 60, so as to omit the additional image-cropping process and obtain the facial image 60 with a higher resolution.

Step S11: the processing module 10 executes a face analysis process on the captured facial images for recognizing a plurality of lip features corresponding to the lips of the user in the facial image.

In one of the exemplary embodiments, the above-mentioned face analysis process is configured to analyze the facial image 42 via execution of the Face Landmark Algorithm for determining a position of the specific part of face in the facial image 42, but this specific example is not intended to limit the scope of the present disclosed example. Furthermore, above-mentioned Face Landmark Algorithm is implemented by the Dlib Library.

During execution of the face analysis process, the processing unit 10 first analyzes the facial image 42 by execution of the above-mentioned Face Landmark Algorithm. The above-mentioned Face Landmark Algorithm is common technology in the art of the present disclosed example. The Face Landmark Algorithm is used to analyze the face in the facial image 42 based on Machine Learning technology for recognizing a plurality of feature points 5 (such as eyebrow peak and eyebrow head, eye tail and eye head, nose bridge and nose wind, ear shell, earlobe, upper lip, lower lip, lip peak, lip body and lip corner so forth, the number of the feature points 5 may be 68 or 198) of one or more specific part(s) (such as eyebrows, eyes, nose, ears or lips) of the face. Moreover, the above-mentioned Face Landmark Algorithm may further mark a plurality of marks of the feature points 5 of the specific part(s) on the facial image 42.

In one of the exemplary embodiments, the processing module 10 may number each feature point 5 according to the part and the feature corresponding to each feature point 5.

Thus, the present disclosed example can determine the position of each part of the face in the facial image 42 according to the information of numbers, shapes, sorts and so forth of the feature points.

One of the exemplary embodiments, the processing module 10 recognizes a plurality of lip feature points 50 respectively corresponding to the different portions of the lips in the facial image 42.

Step S12: the processing module 10 generates a lip mask 61 based on the lip feature points and the facial image 60. Above-mentioned lip mask 61 is used to indicate position and range of the lips in the facial image 60.

In one of the exemplary embodiments, the processing module 10 is configured to connect the lip feature points with the designated serial numbers for obtaining the position and the range of the lips.

Step S13: the processing module 10 retrieves lip color data 62. Above-mentioned lip color data is used to express the designated color of the color lip cosmetic and may be stored in the storage module 15 in advance.

In one of the exemplary embodiments, the storage module 15 may store a plurality of default lip color data in advance, with each default lip color data respectively corresponding to different lip colors. The processing module 10 may select one of the pluralities of default lip color data as the lip color data 62 automatically or by user operation.

Step S14: the processing module 10 executes a simulation process of lip makeup on the lips in the facial image 60 based on the lip color data 62 and the lip mask 61 for obtaining the facial image 64 with lip makeup. The lips of above-mentioned facial image 64 with lip makeup 64 is coated with the lip color corresponding to the lip color data. Namely, the facial image with lip makeup 64 is a simulated image of appearance of the user coating the designated lip color.

In one of the exemplary embodiments, during execution of the simulation process of lip makeup, the processing module 10 coats the lip mask with the color corresponding to lip color data for obtaining a customized template 63, and applies the template 63 to the lips of the facial image 60 for obtaining the facial image with lip makeup 64.

Step S15: the processing module 10 displays the generated facial image with lip makeup 64 on the display module 11.

In one of the exemplary embodiments, the processing module 10 displays the front mirror images on the display module 11, and simultaneously displays the facial image with lip makeup 64 as a cover. The facial image of the front mirror images is covered by the facial image with lip makeup 64, so the display module 11 displays the appearance of the user with lip makeup.

The present disclosed example can effectively simulate the appearance of the user with lip makeup as a reference for selecting the type of lip makeup for the user.

Because the displayed facial image with lip makeup is generated by the image of the user without lip makeup, via the display effect of augmented reality, the present disclosed example can make the user see his/her appearance with lip makeup even he/she does not have the lip makeup on, so as to significantly improve the user experience.

Step S16: the processing module 10 determines whether the augmented reality display should be terminated (such as the user disables the function of simulating lip makeup or turns off the apparatus of simulation makeup 1).

If the processing module 10 determines that the augmented reality display should not be terminated, the processing module 10 performs the steps S10-S15 again for simulating and displaying the new facial image 64 with lip makeup. Namely the processing module 10 refreshes the display pictures. Otherwise, the processing module 10 stops executing the method.

In one of the exemplary embodiments, if the augmented reality display should not be terminated, the processing module 10 will not re-compute the new facial image 64 with lip makeup (such as the steps S14-S15 will not be performed temporarily). In this status, the processing module 10 is configured to re-compute the new facial image 64 with lip makeup when a default recomputation condition satisfies. The above default re-computation condition may be when detecting that the user's head moves, a default time elapses, the user changes, the user inputs a command of recomputation and so forth.

In one of the exemplary embodiments, the processing module 10 does not re-compute even when detecting that the user's head moves (such as the position or angle of the head changes), but adjusts the display of the facial image with lip makeup 64 (such as position or angle) based on the variation of position or angle of the head. Thus, the present disclosed example can significantly reduce the amount of computation and improve system performance.

In one of the exemplary embodiments, the processing module 10 is configured to re-compute the new facial image with lip makeup 64 when the detected variation of position or angle of the head is greater than a default variation.

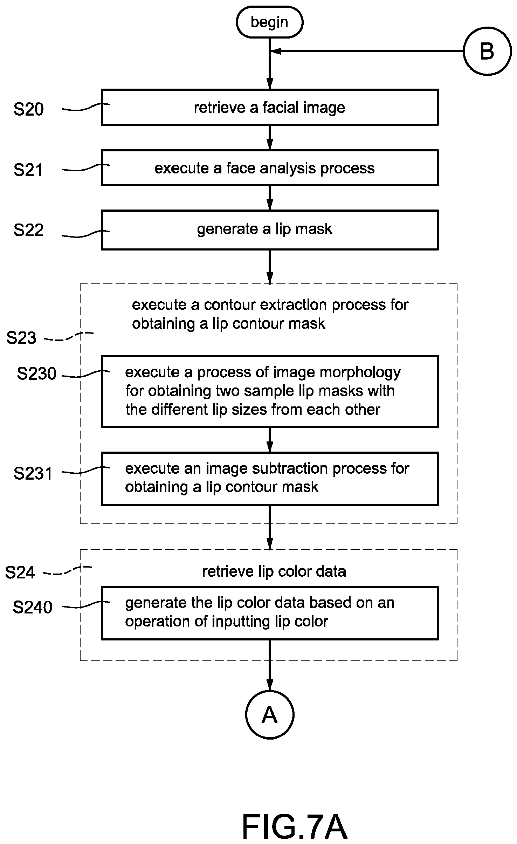

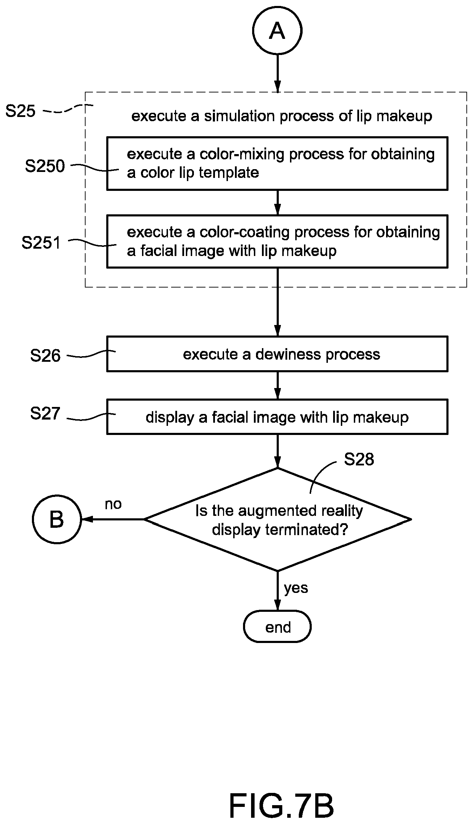

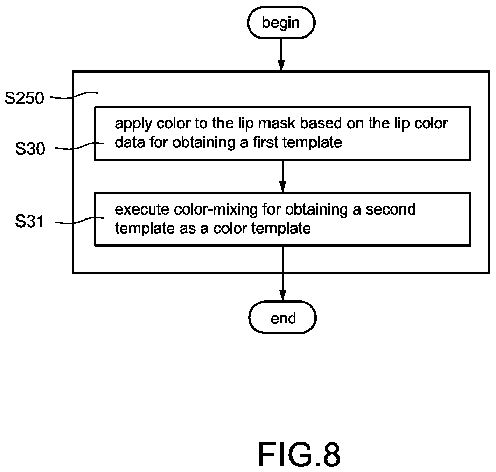

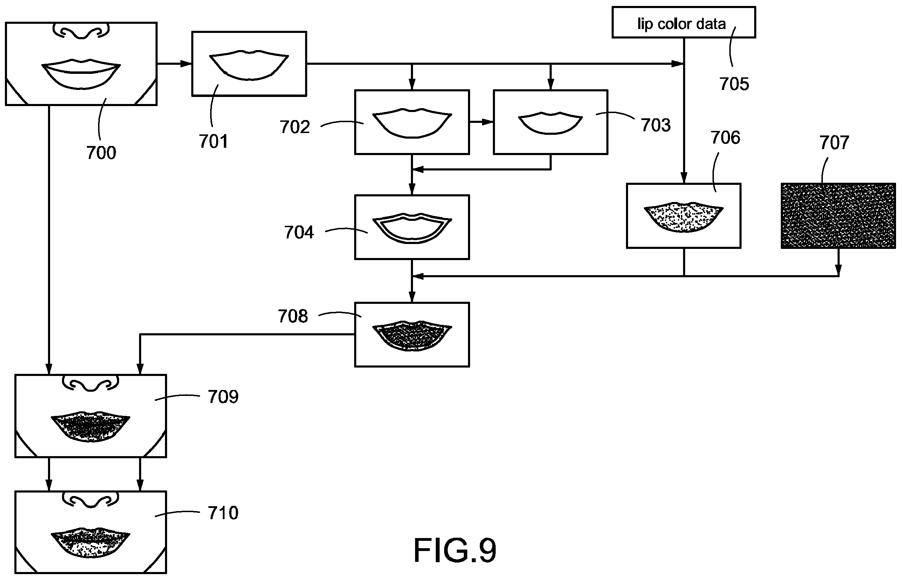

Please refer to FIG. 7A to FIG. 9 simultaneously, FIG. 7A is a first part of flowchart of an augmented reality display method of simulated lip makeup according to a second embodiment of the present disclosed example, FIG. 7B is a second part of flowchart of an augmented reality display method of simulated lip makeup according to a second embodiment of the present disclosed example, FIG. 8 is a flowchart of a color-mixing process according to a third embodiment of the present disclosed example, and FIG. 9 is a schematic view of simulated lip makeup according to one embodiment of the present disclosed example. In the second embodiment, the present disclosed example further optimizes the coloring of lip contour. Moreover, the present disclosed example further provides a function of simulating dewy lip makeup.

Please be noted that in the present disclosed example, the lip color data and each lip mask (such as the lip mask and the lip contour mask) may be expressed in a way of mathematics (such as matrix), or in a way of image (such as monochrome image, halftone image or gray-scaled image), but these specific examples are not intended to limit the scope of the present disclosed example.

More specifically, the augmented reality display method of simulated lip makeup of the second embodiment comprises the following steps for implementing the function of simulating lip makeup.

Step S20: the processing module 10 captures toward the user to obtain the complete front mirror image which may comprise an image of the upper body of the user and an image of background, and execute a facial recognition process on the front mirror image being captured to crop the facial image of the user (FIG. 9 only shows the partial facial image 700). For example, the processing unit 10 may execute a lip recognition process on the front mirror image to obtain a lip image of the user, and expand the lip image for a default size (such as default number of pixels) to obtain the facial image 700.

Step S21: the processing module 10 executes the face analysis process to the facial image 700 for recognizing the position and range of the lips of the user in the facial image 700.

Step S22: the processing module 10 generates a lip mask 701 based on the position and range of the lips and the facial image 700.

Step S23: the processing module 10 executes a contour extraction process to the lip mask 701 for obtaining a lip contour mask 704. Above-mentioned lip contour mask 704 is used to indicate the position and range of the contour of the lips in the facial image 700.

In one of the exemplary embodiments, the contour extraction process of the step S23 may comprise following steps S230-S231.

Step S230: the processing module 10 executes a process of image morphology to the lip mask 701 for obtaining two sample lip masks 702, 703 with different lip sizes from each other.

One of the exemplary embodiments, the processing module 10 executes an erosion process to the lip mask 701 for obtaining a first sample lip mask with the smaller size, and configures the lip mask 701 with the bigger size as a second sample lip mask.

In one of the exemplary embodiments, the processing module 10 executes a dilation process to the lip mask 701 for obtaining a first sample lip mask with the bigger size, and configures the lip mask 701 with the smaller size as a second sample lip mask.

In one of the exemplary embodiments, the processing module 10 executes the dilation process to the lip mask 701 for obtaining a first sample lip mask with the bigger size, and executes the erosion process to the lip mask 701 for obtaining a second sample lip mask with the smaller size.

Step S231: the processing module 10 executes an image subtraction process to the two sample lip masks 702, 703 to obtain a lip contour mask 704. Namely, the lip contour mask 704 is used to indicate the difference of lip sizes between the two sample lip masks 702, 703.

Thus, the present disclosed example can compute the position and range of the lip contour based on using only one lip mask 701.

Step S24: the processing module 10 retrieves lip color data 705.

In one of the exemplary embodiments, the lip color data 705 is a monochrome image, and the color of the monochrome image is the same as the lip color corresponding to the lip color data 705.

In one of the exemplary embodiments, the step S24 further comprises a step S240: the processing module 10 receiving an operation of inputting lip color from the user by the input module 13, and generating the lip color data 705 based on the operation of inputting lip color.

In one of the exemplary embodiments, above-mentioned operation of inputting lip color is used to input the color codes of lip color (such as the color codes of a lipstick) or to select one of the lip colors. The processing module 10 is configured to generate the lip color data 705 corresponding to the color based on the color codes or lip color.

Thus, the present disclosed example can allow the user to select the lip color of makeup which the user would like to simulate.

Step S25: the processing module 10 executes a simulation process of lip makeup to the facial image 700 based on the lip contour mask 704, the lip color data 705 and the lip mask 701 for obtaining the facial image with lip makeup 709.

In one of the exemplary embodiments, the simulation process of lip makeup in step S25 further comprise the following steps S250-S251.

Step S250: the processing module 10 executes a color-mixing process based on the lip color data 705, the lip color data 701 and the lip contour mask 704 for obtaining the color lip template 708. The above-mentioned color lip template 708 is used to indicate each position of the lips after the simulation makeup is applied. Moreover, the color of contour of the lips is lighter than the color of body of the lip.

In one of the exemplary embodiments the processing module 10 first executes the color-mixing process based on the lip color data 705 and the lip mask 701 or obtaining basic color lip template 706, and then executes the color-mixing process based on the basic color lip template 706 and the lip contour mask 704 to obtain the color lip template 708.

Please refer to FIG. 8, one of the exemplary embodiments, in which the color-mixing process shown in step S250 further comprises following steps S30-S31.

Step S30: the processing module 10 paints the lip mask 701 based on the lip color data 705 for obtaining a first template 706.

Step S31: the processing module 10 executes the color-mixing based on a contour transparency amount, the lip contour mask 704, a body transparency amount and the first template 706 for obtaining a second template as the color lip template 708.

Furthermore, the processing module 10 may apply a color template 707 (such as black color template or white color template, take block color template for example in FIG. 9) to the following formulas 1-3 for executing the above-mentioned color-mixing process to obtain the color lip template 708. Above-mentioned color template 707 is used to configure the position and range of lips by use of logic operations, such as the XOR operation.

$$Y(x,y) = \beta \times S1(x,y) + \alpha \times S2(x,y) \dots\dots\dots\dots\dots\dots\dots\dots\dots\dots\dots\dots\dots\text{formula 1;}$$

$$\alpha = amount \times M(x,y) \dots\dots\dots\dots\dots\dots\dots\dots\dots\dots\dots\dots\dots\dots\dots\dots\text{formula 2;}$$

$$\beta = 1 - \alpha \dots\dots\dots\dots\dots\dots\dots\dots\dots\dots\dots\dots\dots\dots\dots\dots\dots\dots\dots\text{formula 3;}$$

, wherein "Y(x, y)" is the pixel value at position (x, y) in the color lip template; "S1(x, y)" is the pixel value at position (x, y) in the color template; "S2(x, y)" is the pixel value of position (x, y) in the first template; "M(x, y)" is the pixel value of position (x, y) in the lip contour mask; "$\alpha$" is the body transparency amount; "$\beta$" is the contour transparency amount; "$\alpha$" and "$\beta$" are adjustable values within 0-1; and "amount" is the adjustable basic transparency amount (such as 0.7).

Please refer to FIG. 7A and 7B simultaneously, then step S251 is performed: the processing module 10 executing a color-coating process to coat the color of the color lip template 708 to each of the corresponding positions of the lips in the facial image 700 to obtain the facial image with lip makeup 709.

The present disclosed example can make the color variety of the contour of the lips be more realistic (with the effect of gradualness) by the execution of color-mixing based on the lip contour mask, so as to generate the facial image with lip makeup with an improved quality of fineness and realness.

The present disclosed example further provides a dewiness function for making the lips of the facial image with lip makeup 709 glossy, so as to implement a more realistic simulation effect via simulating the dewiness effect of the lip makeup. More specifically, the method of the present disclosed example further comprises a step S26 for implementing the dewiness function.

Step S26: the processing module 10 executes a process of emphasizing brightness levels to the facial image with lip makeup 709 based on the brightness distribution of the lips of the facial image 700 for increasing the image brightness of the designated positions of the lips to obtain the facial image with dewy lip makeup 710.

Step S27: the processing module 10 controls the display module 11 to display the facial image with dewy lip makeup 710.

Step S28: the processing module 10 determines whether the augmented reality display should be terminated (such as when the user disables the function of simulating lip makeup or turns off the apparatus of simulation makeup 1).

If the processing module 10 determines that the augmented reality display should not be terminated, the processing module 10 performs the steps S20-S27 again for simulating and displaying the new facial image 64 with lip makeup. Namely, the processing module 10 refreshes the display pictures. Otherwise, the processing module 10 stops executing the method.

Please be noted that above-mentioned contour extraction process recited in the step S23 and the dewiness process recited in the step S26 are just used to improve the image quality of the facial image with lip makeup, rather than the necessary steps for solving the main problem of the present disclosed example. The person with ordinary skill in the art may optionally modify the present disclosed example to ignore the steps S23 and S26 based on the above-mentioned disclosure, but this specific example is not intended to limit the scope of the present disclosed example.

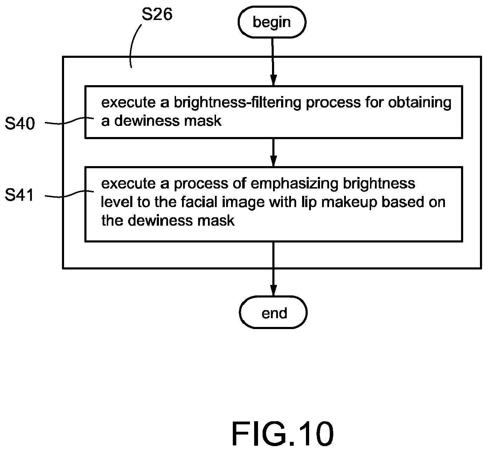

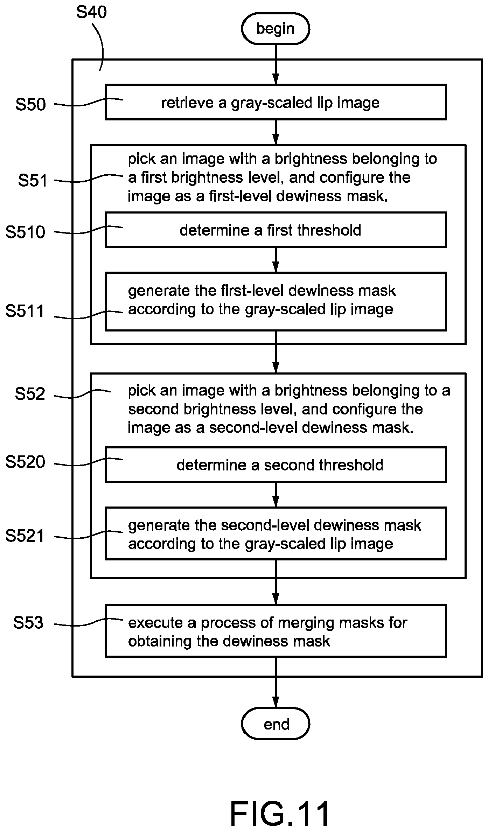

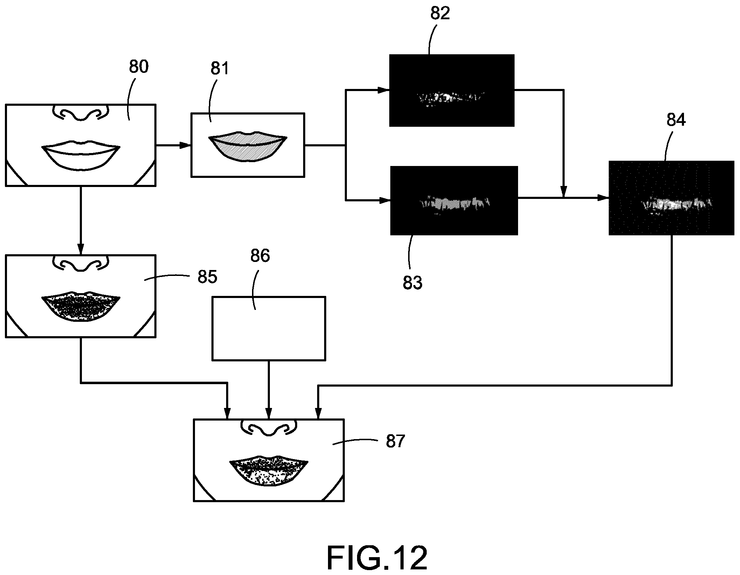

Please refer to FIG. 7A, FIG. 7B, FIG.10 to FIG. 12. FIG. 10 is a flowchart of a dewiness process according to a fourth embodiment of the present disclosed example, FIG. 11 is a flowchart of a brightness-filtering process according to a fifth embodiment of the present disclosed example, and FIG. 12 is a schematic view of a simulated dewy effect according to one embodiment of the present disclosed example.

In comparison with the embodiment shown in FIG. 7A and FIG. 7B, in this embodiment, the dewiness process of the step S26 further comprises following steps.

Step S40: the processing module 10 executes a brightness-filtering process to the lips of the facial image 80 based on at least one of the brightness levels for obtaining a dewiness mask 84. Each of the brightness levels may be expressed as a percentage, such as the percentage of brightness level. The above-mentioned dewiness mask is used to indicate the positions and ranges of the subimages in the lips in which their brightness satisfies the above-mentioned brightness level.

Step S41: the processing module 10 executes a process of emphasizing brightness level to the facial image with lip makeup 85 based on the dewiness mask 84 for increasing the image brightness of the positions designated by the dewiness mask 84 to generate the facial image with dewy lip makeup 87.

Furthermore, the processing module 10 may apply a color template 86 (such as black color template or white color template, take white color template for example in FIG. 12) to the above-mentioned color-mixing process to obtain the facial image with dewy lip makeup 87. Above-mentioned color template 86 is used to configure the position and range of lips by logic operations, such as the XOR operation.

Please refer to FIG. 11, one of the exemplary embodiments, in which the execution of the step S40 may generate a multilevel gradation dewiness mask, so as to make the generated facial image with lip makeup 87 with the multilevel gradation dewy effect. More specifically, the step S40 may comprises following steps S50-S53.

Step S50: the processing module 10 executes a gray-scale process to the color lip image in the facial image 80 to translate the color lip image on the facial image 80 into a gray-scaled lip image 81.

Step S51: the processing module 10 picks an image with a brightness belonging to a first brightness level (such as the image composed of the pixels with the brightness belonging top 3%) in the lips of the facial image 80, and configures the image as a first-level dewiness mask.

In one of the exemplary embodiments, the step S51 further comprises the following steps S510-S511.

Step S510: the processing module 10 determines a first threshold based on the brightness of at least one pixel reaching the first brightness level.

Step S511: the processing module 10 generates the first-level dewiness mask 82. The brightness of a plurality of pixels are configured as a first brightness value (the first brightness value may be the same as the first threshold), wherein the brightness of pixels of the gray-scaled lip image 81 respectively corresponding to the configured pixels of the above-mentioned first-level dewiness mask 82 are greater than the first threshold. Moreover, the brightness of the other pixels of the above-mentioned first-level dewiness mask 82 may be configured as a background value that is different from the first brightness value (such as the minimum or maximum of the range of pixel values).

Step S52: the processing module 10 picks an image with a brightness belonging to a second brightness level in the lips of the facial image 80, and configures the image as a second-level dewiness mask 83. The above-mentioned first brightness level is higher than the above-mentioned second brightness level.

In one of the exemplary embodiments, the step S52 further comprises the following steps S520-S521.

Step S520: the processing module 10 determines a second threshold based on the brightness of at least one pixel reaching the second brightness level, wherein the second threshold is less than the above-mentioned first threshold.

Step S521: the processing module 10 generates a second-level dewiness mask 83 based on the gray-scaled lip image 81. The brightness of a plurality of pixels are configured as a second brightness value (the second brightness value may be the same as the second threshold), wherein the brightness of pixels of the gray-scaled lip image 81 respectively corresponding to the configured pixels of the above-mentioned second-level dewiness mask 82 are greater than the second threshold. Moreover, the brightness of the other pixels of the above-mentioned second-level dewiness mask 82 may be configured as a background value that is different from the second brightness value. The first brightness value, the second brightness value and the background value are all different from each other.

One of the exemplary embodiments, the processing module 10 may generate the dewiness mask of each of the above-mentioned designated brightness levels based on the formulas 4-6 shown below.

$$P(g) = \sum_{x=0}^{w} \sum_{y=0}^{h} \begin{cases} 1, & if\ I(x,\ y) > g \\ 0, & otherwise \end{cases} \quad \text{..............................................formula 4;}$$

$$Th = argmin(P(g) > w \times h \times level\ ) \text{..................................................formula 5;}$$

$$dst(x, \qquad\qquad y) \qquad\qquad =$$
$$\begin{cases} maskVal, & if\ src(x,y) > Th \\ backVal, & otherwise \end{cases} \quad \text{.........................................formula 6;}$$

, wherein "P(g)" is the number of pixels with the brightness value (such as pixel value) that is greater than "g" in the gray-scaled lip image; "w" is the image width; "h" is the Image length; *"I(x,* y)" is the brightness values at position "(x, y)" in the gray-scaled lip image; "level" is the brightness level (such as 3%, 10% or 50%); "*Th*" is the minimum brightness value with the ability to make "P(g)" greater than "w×h×level" namely, the threshold; "dst(x, y)" is the brightness value at position "(x, y)" in the dewiness mask; *"maskVal"* is the mask value corresponding to the brightness level (such as 255, 150 and so forth, the mask value may be determined based on the total layer number of the dewiness mask, and the mask values of the multiple layers are different from each other); "*backVal*" is the background value (in the following processes, the pixels with the brightness being the background value will be ignored); and *"src(x, y)"* is the brightness value at position "(x, y)" in the gray-scaled lip image.

Taking the retrieval of the first-level dewiness mask corresponding to the first brightness level (such as 3%) for example, the processing module 10 may use the formulas 4 and 5 to compute the first threshold "Th" (such as 250). Then, based on the formula 6, when the brightness of each pixel of the gray-scaled lip image corresponding to each pixel of the first-level dewiness mask is greater than 250, the processing module 10 configures the brightness value of this pixel of the first brightness level to be the first brightness value "*maskVal*" (such as 255, the first brightness value and the first threshold may be the same as or different from each other), and configures the brightness of each of the other pixels of the first-level dewiness mask to be the background value. Thus, the first-level dewiness mask can be obtained.

Taking the retrieval of the second-level dewiness mask corresponding to the second brightness level (such as 30%) for example, the processing module 10 may use the formulas 4 and 5 to compute the second threshold "Th" (such as 200). Then, based on the formula 6, when the brightness of each pixel of the gray-scaled lip image corresponding to each pixel of the second-level dewiness mask is greater than 200, the processing module 10 configures the brightness value of this pixel of the second-level dewiness mask to be the second brightness value "*maskVal*" (such as 150, the second brightness value and the second threshold may be the same as or different from each other), and configures the brightness of each of the other pixels of the second-level dewiness mask to be the background value. Thus, the second-level dewiness mask can be obtained, and so on.

Step S53: the processing module 10 executes a process of merging masks on the first-level dewiness mask 82 and the second-level dewiness mask 83 to obtain the dewiness mask 84 as the result of mergence. The above-mentioned dewiness mask 84 is used to indicate both the positions and ranges of images reaching the first brightness level in the lips, and the positions and ranges of images reaching the second brightness level in the lips.

In one of the exemplary embodiments, the brightness of a first group of pixels is configured to be the first brightness value, the brightness of a second group of pixels is configured to be the second brightness value, and the brightness of the other pixels is configured to be the background value. The brightness of the pixels of the gray-scaled lip image 81 respectively corresponding to the above-mentioned first ground of pixels is not greater than the first threshold, and the brightness of the pixels of the gray-scaled lip image 81 respectively corresponding to the above-mentioned second ground of pixels is not greater than the second threshold.

Thus, the present disclosed example can generate a multilevel gradation dewiness mask, so as to make the lips of the simulated facial image with lip makeup 87 have the multilevel gradation dewy effect.

Please note that although the above embodiment takes generating the two-layered dewiness mask for example, this specific example is not intended to limit the scope of the present disclosed example. A person with ordinary skill in the art may optionally increase or reduce the number of layers of the dewiness mask based on above disclosure.

Please note that although the above embodiments take executing the augmented reality display method of simulated lip makeup in local-end as the explanation, this specific example is not intended to limit the scope of the present disclosed example.

In one of the exemplary embodiments, the present disclosed example executes the augmented reality display method of simulated lip makeup in combination with cloud technology. More specifically, the apparatus of simulation makeup 1 is only used to capture the images, receive operation and display information (such as the steps S10, S15 and S16 shown in FIG. 4, the steps S20, S240, S27 and S28 shown in FIG. 7A and FIG. 7B), and part or all of the others processing steps are performed by the processing module 30 and the storage module 35 of the cloud server 3.

Taking the augmented reality display method of simulated lip makeup shown in FIG. 4 for example, after the apparatus of simulation makeup 1 performs the step S10, the apparatus of simulation makeup 1 may upload the captured detection images to the cloud server 3 continuously, then the processing module 30 of the cloud server 3 performs the steps S11-S14 for generating the facial image with lip makeup. Then, the cloud server 3 may transfer the facial image with lip makeup to the apparatus of simulation makeup by network 2, so as to make the apparatus of simulation makeup 1 output the facial image with lip makeup on the display module 11.

**Claims**

1. An augmented reality display method of simulated lip makeup, the method being applied to a system of simulation makeup, the system of simulation makeup comprising an image capture module (12), a display module (11) and a processing module (10, 30), the method comprising following steps:

   a) retrieving a facial image (42, 60, 700, 80) of a user (40) by the image capture module (12);
   b) at the processing module (10, 30), executing a face analysis process on the facial image (42, 60, 700, 80) for recognizing a plurality of lip feature points (50) corresponding lips in the facial image (42, 60, 700, 80);
   c) generating a lip mask (61, 701) based on the lip feature points (50) and the facial image (42, 60, 700, 80), wherein the lip mask (61, 701) is used to indicate position and range of the lips in the facial image (42, 60, 700, 80);
   d) retrieving lip color data (62, 705);
   e) executing a simulation process of lip makeup on the lips of the facial image (42, 60, 700, 80) based on the lip color data (62, 705) and the lip mask (61, 701) for obtaining a facial image with lip makeup (64, 709, 85); and
   f) displaying the facial image with lip makeup (64, 709, 85) on the display module (11).

2. The augmented reality display method of simulated lip makeup according to claim 1, further comprising a step g) performed before the step e) and after the step c): executing a contour extraction process on the lip mask (61, 701) for obtaining a lip contour mask (704), wherein the lip contour mask (704) is used to indicate position and range of a contour of the lips in the facial image (42, 60, 700, 80);
   wherein the simulation process of lip makeup comprises following steps:

   h1) executing a color-mixing process based on the lip color data (62, 705), the lip mask (61, 701) and the lip contour mask (704) for obtaining a color lip template (708), wherein the color lip template (708) is used to indicate color of each position of the lips, if color of contour of the lips is lighter than color of body of the lip; and
   h2) executing a color-coating process to coat a plurality of corresponding positions of the lips of the facial image (42, 60, 700, 80) with colors indicated by the color lip template (708) for obtaining the facial image with lip makeup (64, 709, 85).

3. The augmented reality display method of simulated lip makeup according to claim 2, wherein the contour extraction process comprises following steps:

   i1) executing a process of image morphology on the lip mask (61, 701) for obtaining two sample lip masks (702, 703) with different lip sizes from each other; and
   i2) executing an image subtraction process on the two sample lip masks (702, 703) for obtaining the lip contour mask (704).

**4.** The augmented reality display method of simulated lip makeup according to claim 2, wherein the color-mixing process comprising following steps:

j1) applying colors to the lip mask (61, 701) based on the lip color data (62, 705) for obtaining a first template; and
j2) mixing colors based on a contour transparency amount, the lip contour mask (704), a body transparency amount and the first template for obtaining a second template, and configuring the second template as the color lip template (708).

**5.** The augmented reality display method of simulated lip makeup according to claim 1, wherein the simulation process of lip makeup comprises following steps:

k1) applying color to the lip mask (60, 701) based on the lip color data (62, 705) for obtaining a color lip template (708), wherein the color lip template (708) is used to indicate color of each position of the lips; and
k2) executing a color-coating process to coat a plurality of positions of the lips of the facial image (42, 60, 700, 80) with colors of the color lip template (708) for obtaining the facial image with lip makeup (64, 709, 85).

**6.** The augmented reality display method of simulated lip makeup according to claim 1, further comprising following steps performed before step f) and after step e):

l1) executing a brightness-filtering process on the lips of the facial image (42, 60, 700, 80) based on a brightness level for obtaining a dewiness mask (84), wherein the dewiness mask (84) is used to indicate position and range of an image in the lips with a brightness reaching the brightness level; and
l2) executing a process of emphasizing brightness level on the facial image with lip makeup (64, 709, 85) based on the dewiness mask (84) to increase an image brightness of each position indicated by the dewiness mask (84) for obtaining the facial image with dewy lip makeup (710, 87);

the step f) is performed to display the facial image with dewy lip makeup (710, 87).

**7.** The augmented reality display method of simulated lip makeup according to claim 6, wherein the brightness-filtering process comprises following steps:

m1) picking an image with a brightness belonging to a first brightness level, and configuring the image with the brightness belonging to the first brightness level as a first-level dewiness mask (82);
m2) picking an image with a brightness belonging to a second brightness level, and configuring the image with the brightness belonging to the second brightness level as a second-level dewiness mask (83), wherein the first brightness level is brighter than the second brightness level; and
m3) executing a process of merging masks on the first-level dewiness mask (82) and the second-level dewiness mask (83) for obtaining the dewiness mask (84), wherein the dewiness mask (84) is used to indicate position and range of image in the lips reaching the first brightness level and position and range of image in the lips reaching the second brightness level.

**8.** The augmented reality display method of simulated lip makeup according to claim 7, wherein the first-level brightness and the second-level brightness are expressed as percentages; the step m1) comprises following steps:

m11) transforming a color lip image in the facial image (42, 60, 700, 80) into a gray-scaled lip image (81);
m12) determining a first threshold based on brightness of at least one pixel reaching the first-level brightness of the gray-scaled lip image (81); and
m13) generating the first-level dewiness mask (82) based on the gray-scaled lip image (81), wherein brightness values of the pixels in the first-level dewiness mask (82) are configured as a first brightness value, brightness values of the pixels in the gray-scaled lip image (81) respectively corresponding to the pixels in the first-level dewiness mask (82) are greater than the first threshold, and brightness values of the other pixels in the first-level dewiness mask (82) are configured as a background value;

the step m2) comprises following steps:

m21) determining a second threshold based on brightness of at least one pixel reaching the second brightness level of the gray-scaled lip image (81); and
m22) generating the second-level dewiness mask (83) based on the gray-scaled lip image (81), wherein brightness values of the pixels in the second-level dewiness mask (83) are configured as a second brightness value being different from the first brightness value, brightness values of the pixels in the gray-scaled lip image (81) respectively corresponding to the pixels in the second-level dewiness mask (83) are greater than the second threshold, and brightness values of the other pixels in the second-level dewiness mask (83) are configured as the background value.

9. The augmented reality display method of simulated lip makeup according to claim 8, wherein the step m3) comprises a step

m31) generating the dewiness mask (84) based on the first-level dewiness mask (82) and the second-level dewiness mask (83), wherein brightness values of a first part of pixels in the dewiness mask (84) are configured to be the first brightness value, the brightness values of the pixels in the gray-scaled lip image (81) respectively corresponding to the first part of the pixels in the dewiness mask (84) are greater than the first threshold, brightness values of a second part of pixels in the dewiness mask (84) are configured to be the second brightness value, the brightness values of the pixels in the gray-scaled lip image (81) respectively corresponding to the second part of the pixels in the dewiness mask (84) are not greater than the first threshold and are greater than the second threshold, and brightness values of the other pixels in the dewiness mask (84) are configured as the background value.

10. The augmented reality display method of simulated lip makeup according to claim 1, wherein the lip color data (62, 705) is a monochrome image, the step d) is performed to receive an operation of inputting lip color for inputting a color code, and generate the lip color data (62, 705) based on the color code.

1

| 13 | 11 | 15 |
|---|---|---|
| input module | display module | storage module |

| processing module | image capture module | transmission module |
|---|---|---|
| 10 | 12 | 14 |

2 — network

3 — cloud server

30 — processing module

35 — storage module

# FIG.1

FIG.2

<u>1</u>

FIG.3

```
                    ┌─────────┐
                    │  begin  │
                    └─────────┘
                         │
      ┌──────────────────┤
      │                  ▼
      │    ┌────────────────────────────────┐
      │    │      retrieve a facial image   │ ──── S10
      │    └────────────────────────────────┘
      │                  │
      │                  ▼
      │    ┌────────────────────────────────┐
      │    │     execute face analysis process │ ──── S11
      │    └────────────────────────────────┘
      │                  │
      │                  ▼
      │    ┌────────────────────────────────┐
      │    │        generate a lip mask     │ ──── S12
      │    └────────────────────────────────┘
      │                  │
      │                  ▼
      │    ┌────────────────────────────────┐
      │    │       retrieve lip color data  │ ──── S13
      │    └────────────────────────────────┘
      │                  │
      │                  ▼
      │    ┌────────────────────────────────┐
      │    │  execute simulation process of lip makeup │ ──── S14
      │    └────────────────────────────────┘
      │                  │
      │                  ▼
      │    ┌────────────────────────────────┐
      │    │  display facial image with lip makeup │ ──── S15
      │    └────────────────────────────────┘
      │                  │            S16
      │                  ▼
      │         ◇─────────────────◇
      │  no    Is the augmented reality
      └────────   display terminated?
                ◇─────────────────◇
                         │ yes
                         ▼
                    ┌─────────┐
                    │   end   │
                    └─────────┘
```

# FIG.4

FIG.5

60

61

62

lip color data

63

64

# FIG.6

```
                              ( begin )
                                  |
                                  |←————————————————— ( B )
                                  ↓
S20 ——⌐   [ retrieve a facial image ]
                                  ↓
S21 ——⌐   [ execute a face analysis process ]
                                  ↓
S22 ——⌐   [ generate a lip mask ]
                                  ↓
          ┌ ─ ─ ─ ─ ─ ─ ─ ─ ─ ─ ─ ─ ─ ─ ─ ─ ─ ─ ─ ─ ┐
          |  execute a contour extraction process for  |
          |  obtaining a lip contour mask              |
S23 ——⌐   |                                            |
          |  S230 ——⌐  [ execute a process of image    |
          |            morphology for obtaining two    |
          |            sample lip masks with the       |
          |            different lip sizes from each   |
          |            other ]                         |
          |                        ↓                   |
          |  S231 ——⌐  [ execute an image subtraction  |
          |            process for obtaining a lip     |
          |            contour mask ]                  |
          └ ─ ─ ─ ─ ─ ─ ─ ─ ─ ─ ─ ─ ─ ─ ─ ─ ─ ─ ─ ─ ┘
                                  ↓
          ┌ ─ ─ ─ ─ ─ ─ ─ ─ ─ ─ ─ ─ ─ ─ ─ ─ ─ ─ ─ ─ ┐
S24 ——⌐   |  retrieve lip color data                   |
          |  S240 ——⌐  [ generate the lip color data   |
          |            based on an operation of        |
          |            inputting lip color ]           |
          └ ─ ─ ─ ─ ─ ─ ─ ─ ─ ─ ─ ─ ─ ─ ─ ─ ─ ─ ─ ─ ┘
                                  ↓
                               ( A )
```

# FIG.7A

FIG.7B

```
              ┌─────────┐
              │  begin  │
              └────┬────┘
                   │
                   ▼
     ┌─────────────────────────────────────────────────┐
S250 │                                                 │
     │   ┌─────────────────────────────────────────┐   │
S30  │   │ apply color to the lip mask based on the │   │
     │   │ lip color data for obtaining a first     │   │
     │   │ template                                 │   │
     │   └──────────────────┬──────────────────────┘   │
     │                      │                           │
     │                      ▼                           │
     │   ┌─────────────────────────────────────────┐   │
S31  │   │ execute color-mixing for obtaining a     │   │
     │   │ second template as a color template      │   │
     │   └─────────────────────────────────────────┘   │
     │                                                 │
     └──────────────────────┬──────────────────────────┘
                            │
                            ▼
                       ┌─────────┐
                       │   end   │
                       └─────────┘
```

# FIG.8

FIG.9

FIG.10

S40

```
                              ( begin )
                                  │
                                  ▼
  S50 ──────────┌──────────────────────────────────┐
                │    retrieve a gray-scaled lip image    │
                └──────────────────────────────────┘
                                  │
                                  ▼
        ┌────────────────────────────────────────────────┐
        │  pick an image with a brightness belonging to   │
  S51 ──│  a first brightness level, and configure the    │
        │  image as a first-level dewiness mask.          │
        │  ┌──────────────────────────────────────────┐  │
  S510 ─│  │       determine a first threshold          │  │
        │  └──────────────────────────────────────────┘  │
        │                    │                            │
        │                    ▼                            │
        │  ┌──────────────────────────────────────────┐  │
        │  │  generate the first-level dewiness mask    │  │
  S511 ─│  │  according to the gray-scaled lip image     │  │
        │  └──────────────────────────────────────────┘  │
        └────────────────────────────────────────────────┘
                                  │
                                  ▼
        ┌────────────────────────────────────────────────┐
        │  pick an image with a brightness belonging to a │
  S52 ──│  second brightness level, and configure the     │
        │  image as a second-level dewiness mask.         │
        │  ┌──────────────────────────────────────────┐  │
  S520 ─│  │      determine a second threshold           │  │
        │  └──────────────────────────────────────────┘  │
        │                    │                            │
        │                    ▼                            │
        │  ┌──────────────────────────────────────────┐  │
        │  │  generate the second-level dewiness mask   │  │
  S521 ─│  │  according to the gray-scaled lip image     │  │
        │  └──────────────────────────────────────────┘  │
        └────────────────────────────────────────────────┘
                                  │
                                  ▼
  S53 ──────────┌──────────────────────────────────┐
                │  execute a process of merging masks for  │
                │  obtaining the dewiness mask            │
                └──────────────────────────────────┘
                                  │
                                  ▼
                               ( end )
```

# FIG.11

FIG.12

Europäisches
Patentamt
European
Patent Office
Office européen
des brevets

## EUROPEAN SEARCH REPORT

Application Number

EP 20 16 5958

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/145882 A1 (NGUYEN PHU [JP] ET AL) 28 May 2015 (2015-05-28) * abstract * * paragraphs [0002], [0003], [0010] - [0012] * * paragraphs [0050], [0065], [0070], [0072], [0073] * * paragraphs [0083] - [0087] * * paragraphs [0094], [0123] - [0130] * * paragraphs [0140] - [0142], [0260], [0261] * * figures 1,8,24C * | 1,2,5,6 | INV. G06T11/00 |
| X | WO 2018/201662 A1 (GUANGZHOU SHIYUAN ELECTRONICS CO LTD [CN] ET AL.) 8 November 2018 (2018-11-08) * paragraphs [0007] - [0021] * * paragraphs [0029] - [0034] * | 1 | |
| A | CN 107 610 201 A (BEIJING XIAOMI MOBILE SOFTWARE CO LTD) 19 January 2018 (2018-01-19) * paragraphs [0008] - [0016], [0030], [0031], [0039] * | 1-10 | TECHNICAL FIELDS SEARCHED (IPC) G06T |
| A | JP 2003 044837 A (DIGITAL FASHION LTD) 14 February 2003 (2003-02-14) * paragraphs [0006] - [0008], [0014] - [0018], [0021] * | 1-10 | |

The present search report has been drawn up for all claims

| Place of search | Date of completion of the search | Examiner |
|---|---|---|
| Munich | 3 September 2020 | Klemencic, Ales |

EPO FORM 1503 03.82 (P04C01)

## ANNEX TO THE EUROPEAN SEARCH REPORT
## ON EUROPEAN PATENT APPLICATION NO.

EP 20 16 5958

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2020

| Patent document cited in search report | Publication date | Patent family member(s) | Publication date |
|---|---|---|---|
| US 2015145882 A1 | 28-05-2015 | CN 104380339 A<br>EP 2985732 A1<br>JP 6396890 B2<br>JP WO2014167831 A1<br>US 2015145882 A1<br>WO 2014167831 A1 | 25-02-2015<br>17-02-2016<br>26-09-2018<br>16-02-2017<br>28-05-2015<br>16-10-2014 |
| WO 2018201662 A1 | 08-11-2018 | CN 107229905 A<br>WO 2018201662 A1 | 03-10-2017<br>08-11-2018 |
| CN 107610201 A | 19-01-2018 | NONE | |
| JP 2003044837 A | 14-02-2003 | JP 3779570 B2<br>JP 2003044837 A | 31-05-2006<br>14-02-2003 |

EPO FORM P0459

For more details about this annex : see Official Journal of the European Patent Office, No. 12/82